(19) Europäisches Patentamt
European Patent Office
Office européen des brevets

(11) Numéro de publication : **0 074 314**
**B1**

(12) # FASCICULE DE BREVET EUROPÉEN

(45) Date de publication du fascicule du brevet : **30.07.86**

(51) Int. Cl.[4] : **C 03 C 17/02**, C 03 C 8/02

(21) Numéro de dépôt : **82401600.0**

(22) Date de dépôt : **30.08.82**

(54) **Dépôt d'émail sur des objets en verre.**

(30) Priorité : **04.09.81 FR 8116851**

(43) Date de publication de la demande : **16.03.83 Bulletin 83/11**

(45) Mention de la délivrance du brevet : **30.07.86 Bulletin 86/31**

(84) Etats contractants désignés : **BE DE FR GB IT LU NL SE**

(56) Documents cités :
**CHEMICAL ABSTRACTS, vol. 87, 1977, page 241, no. 188423p, Columbus Ohio (USA);**

(73) Titulaire : **SAINT-GOBAIN VITRAGE**
**Les Miroirs 18, avenue d'Alsace**
**F-92400 Courbevoie (FR)**
**BE FR GB IT LU NL SE**
**VEGLA Vereinigte Glaswerke GmbH**
**Viktoriaallee 3-5**
**D-5100 Aachen (DE)**
**DE**

(72) Inventeur : **de Cooman, René**
**75 rue Verrier**
**F-59580 Aniche (FR)**
Inventeur : **Didelot, Claude**
**18 rue des deux ronds points**
**F-77380 Combs la Ville (FR)**

(74) Mandataire : **Leconte, Jean-Gérard et al**
**Saint-Gobain Recherche 39, Quai Lucien Lefranc**
**F-93304 Aubervilliers Cedex (FR)**

**EP 0 074 314 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne le dépôt d'émail sur du verre.

Jusqu'à maintenant, pour faire des dépôts d'émail sur le verre, que ce soit des dépôts d'une inscription, marque ou numéro, des dépôts conducteurs pour résistances chauffantes ou antennes radio, des dépôts conducteurs pour résistance chauffantes ou antennes radio, des dépôts protecteurs par exemple pour protéger la colle servant à maintenir des accessoires tels des rétroviseurs, sur les pare-brises, pour protéger la colle servant au montage des vitrages sur les automobiles, ou que ce soit des dépôts décoratifs, on utilise un émail en suspension dans un médium ou liant, huileux, en général à base d'huile de pin.

Avec ce liant on peut obtenir un bon étalement sur le verre, on ne remarque pas de détérioration des couleurs de l'émail, on peut atteindre des viscosités permettant l'application par sérigraphie, on ne craint pas l'incompatibilité avec les machines traitant du verre et possédant beaucoup d'organes graissés.

Mais après dépôt de la suspension d'émail, un séchage relativement long en étuve est nécessaire pour éliminer le liant, et pour obtenir un revêtement provisoire suffisamment consistant pour que l'objet en verre puisse poursuivre son cycle de fabrication. Ce revêtement provisoire sera ultérieurement transformé en revêtement définitif d'émail par un traitement thermique à haute température qui vitrifie l'émail. Ce séchage intermédiaire de l'émail en suspension dans le liant doit être conduit minutieusement, plus particulièrement lorsque le dépôt est de grande dimension, car il faut éviter que sous l'action de la chaleur le liant ne se mette à bouillir, laissant ainsi sur le verre, un revêtement cloqué. Ce doit donc être une phase spéciale de séchage et elle est relativement longue. En outre, bien que consistant, ce revêtement n'est pas véritablement dur, et l'objet ainsi revêtu doit toujours être manipulé avec précautions, la dureté définitive n'étant acquise qu'après vitrification de l'émail. Il en résulte donc une perte de temps, et des installations de séchage coûteuses, une rupture dans le cycle de fabrication de certains objets en verre, des difficultés de manipulations.

Dans un autre domaine, celui de la poterie et de la céramique, on a proposé (demande de brevet JP 75/142873) pour éviter les coulures lors du dépôt d'une « couverte » c'est-à-dire d'une couche de finition vernissée, transparente sur des objets de poterie ou de cérémique, d'ajouter à la préparation vernissée à déposer, une faible proportion, inférieure à 10 %, de composés organiques, polymérisables aux U.V. Après dépôt de la couche vernissée, on soumet l'objet d'abord à un rayonnement U.V., puis rapidement à une température élevée de l'ordre de 1 200 °C. Cette irradiation des composés organiques évite les coulures, raccourcit le temps de fabrication mais ne permet pas un usage des objets avec vitrification.

La présente invention vise à remédier aux problèmes posés par les liants utilisés jusqu'ici pour réaliser des dépôts sur du verre, en particulier vise à éviter le séchage, tout en permettant l'obtention d'un revêtement provisoire plus dur qui autorise des manipulations et un usage des objets avant la vitrification finale.

Elle propose pour cela de déposer sur l'objet en verre, un mélange d'émail et de liant contenant des composés organiques polymérisant sous l'action d'un rayonnement, notamment rayonnement UV, la proportion de liant dans le mélange étant supérieure au 1/4 et de préférence comprise entre 1/3 et 1/2, de soumettre l'objet et en particulier la zone du dépôt, au rayonnement sur ses deux faces pour obtenir un revêtement dur, notamment capable d'être soumis sans détérioration au roulage de l'objet sur des rouleaux de transport, face revêtue contre les rouleaux, puis le dépôt étant polymérisé et durci, de continuer le cycle de fabrication de l'objet, puis de soumettre ledit objet à un traitement à haute température cependant inférieure à la température de ramollissement du verre, pendant lequel les composés organiques brûlent, puis pendant lequel l'émail est vitrifié.

Ce traitement thermique peut être combiné avec une phase du cycle de fabrication de l'objet, notamment, un bombage ou un réchauffage en vue d'un bombage ou d'une trempe.

Le liant utilisable pour effectuer de tels dépôts d'émail sur du verre comprend un ou plusieurs monomères réagissant aux UV, un ou plusieurs oligomères réagissant rapidement aux UV, accélérant la réaction de polymérisation et l'étendant aux monomères, un photo initiateur.

Avantageusement, ce liant comprend également des additifs, en particulier des tensio-actifs, des diluants, pour assurer la bonne viscosité du mélange et le bon étalement sur le verre.

Ce liant est de préférence tel qu'il ne laisse pratiquement pas de résidu sur le verre lorsqu'il brûle. En effet, des résidus, en particulier des résidus carbonés, nuiraient à la bonne adhérence de l'émail sur le verre et d'autre part risqueraient d'altérer la couleur dudit émail.

Parmi les monomères employés, les composés acryliques donnent de bons résultats, et parmi eux les monomères A et B suivants :

Produit A (Acrylate de 2 hydroxy-éthyle)

$$CH_2 = CH - \overset{\overset{O}{\|}}{C} - O - CH_2 - CH_2OH$$

Produit B (Acrylate de 2 hydroxy propyle)

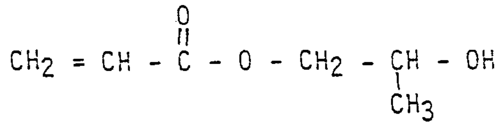

ou des mélanges de ces monomères.

En tant qu'oligomère on peut employer des polyesters insaturés et en particulier le produit C suivant : polyester d'acide orthophtalique, d'acide maléïque et de butanediol 1-4.

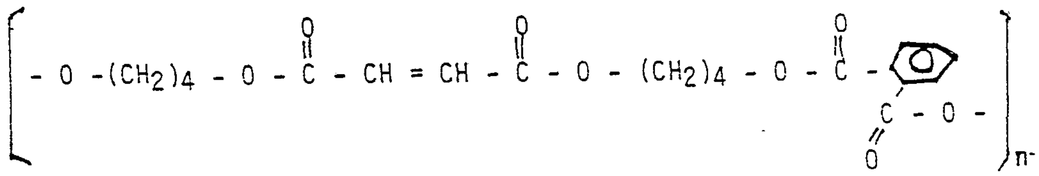

produit qui facilite le déclenchement et la propagation de la polymérisation.

Pour favoriser la polymérisation rapide des composés ci-dessus, on ajoute un photo-initiateur. Soumis à un rayonnement, il se scinde en radicaux actifs qui déclenchent la polymérisation de la résine comprenant les composés A, B et C.

Comme photo initiateur on peut citer les alkyl éther de benzoïne (que nous appelerons par la suite produit D).

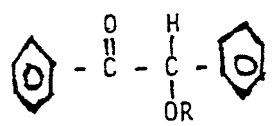

et en particulier l'éthyl éther de benzoïne qui se décompose sous l'action du rayonnement en :

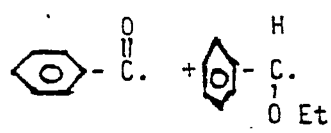

A titre d'exemple, on peut utiliser des produits contenant ces composés et ayant pour noms commerciaux :

Plex 6628.0 de la Société Röhm (mélange de monomères et d'oligomères)
Plex 6673.0 de la Société Röhm (mélange de monomères et d'oligomères)
Darocur de la Société Ciba Geigy (photo initiateur)

Un mélange contenant la composition pondérale suivante a donné satisfaction :

| | |
|---|---|
| Plex 6628.0 | 48 parties |
| Plex 6673.0 | 20 parties |
| Darocur | 5 parties |
| Email en poudre | 100 parties |

Un autre mélange contenant la composition suivante a également donné satisfaction :

| | |
|---|---|
| Plex 6673.0 | 90 parties |
| Darocur | 5 parties |
| Email en poudre | 170 parties |

Ainsi de l'émail en poudre est mélangé au liant ayant par exemple l'une des formules ci-dessus.

Dans tous les cas, pour avoir une dureté suffisante, la part de liant dans le mélange déposé sur le verre est importante et supérieure à 1/4 et de préférence comprise entre 1/3 et 1/2.

L'émail choisi est tel qu'il peut vitrifier à des températures compatibles avec le verre, à savoir des températures inférieures au point de ramolissement du verre. Ainsi, il contiendra de relativement basses proportions de silice, avantageusement des proportions comprises entre 15 et 30 % du poids total d'émail.

Le mélange est appliqué à température ambiante sur le support en verre par sérigraphie. Des dépôts très étroits peuvent être obtenus sans problème, par exemple 2 à 3/10 de mm. L'épaisseur du revêtement peut par exemple être de l'ordre de quelques (5 à 10) centièmes de mm.

Le verre ainsi revêtu est soumis à la lumière UV pendant un temps très court, de l'ordre de la seconde,

par exemple à la lumière de tubes haute pression à vapeur de mercure de 80 watts ou plus par cm de longueur. Avantageusement, les lampes ou tubes émettant la lumière U.V. sont disposées au-dessus, mais également en dessous du verre. Ce temps suffit à polymériser le liant organique et à obtenir un revêtement que nous avons appelé intermédiaire, d'émail et de résine polymérisée, sec, dur, non rayable à l'ongle, suffisamment dur pour que l'objet en verre ainsi revêtu puisse sans précautions particulières, et sans détérioration dudit revêtement poursuivre son cycle de fabrication. Les émaux employés pourront contenir des colorants, par exemple des oxydes tels que $Cu_2O$, $Cr_2O_2$, ou $CuCr_2O_4$ conférant une teinte noire.

Une feuille de verre portant de tels revêtements pourra être manipulée, transportée sur des rouleaux, face revêtue contre les rouleaux si nécessaire, être empilée, avec tous les inconvénients du glissement des feuilles les unes contre les autres que cela implique et cela sans dommage pour le revêtement.

Après toutes les manipulations et tous les cycles de fabrication nécessaires, l'objet en verre doit être soumis à un traitement thermique pendant lequel, le liant organique sera calciné, aux alentours de 170 °C, laissant sur le verre l'émail seul. Ensuite le traitement se poursuivant, l'émail se vitrifiera et cela à une température inférieure à 600 °C, par exemple vers 550 °C. Ce traitement thermique nécessaire peut être combiné avec une phase de fabrication de l'objet en verre, par exemple une opération de bombage du verre, ou de réchauffage en vue du bombage. Par exemple si le dépôt a été fait sur une feuille de verre destinée à faire partie d'un pare-brise feuilleté bombé, par exemple un dépôt sur la périphérie du vitrage pour masquer la future couche de colle servant à la pose sur la carosserie d'automobile, le dépôt de l'émail en suspension dans le liant organique pourra être fait après découpe et façonnage des bords de ladite feuille. La feuille ainsi revêtue subira un bref passage à la lumière UV, après quoi elle pourra être traitée sans aucun ménagement particulier. Elle pourra être manipulée pour être assemblée avec une autre feuille et pour cela rouler sur des rouleaux, être prise en charge par des appareils agissant sur la partie revêtue de sa surface. Associée avec une autre feuille, elle pourra être disposée sur un squelette de bombage et enfournée dans le four de bombage. C'est au cours du réchauffage et du bombage que la calcination du liant et la vitrification apparaîtront.

On obtient ainsi un pare-brise feuilleté ayant sur la périphérie de la face extérieure de l'une des feuilles, une bande d'émail pouvant masquer la colle servant au montage du pare-brise.

Etant donné que le liant ne contient pas de solvant, il n'est pa nécessaire, de nettoyer le pochoir de sérigraphie et en général tous les matériels ayant touché au liant, à chaque arrêt de fabrication.

**Revendications**

1. Procédé de revêtement d'un objet en verre à l'aide d'émail, caractérisé en ce qu'on dépose sur ledit objet un mélange constitué d'émail en suspension dans un liant organique polymérisant sous l'action d'un rayonnement, notamment UV, la proportion de liant dans le mélange étant supérieure au 1/4, on soumet l'objet et au moins la zone de dépôt, sur ses deux faces, au rayonnement pour obtenir un revêtement dur, notamment capable d'être soumis sans détérioration au roulage de l'objet sur des rouleaux de transport, face revêtue contre les rouleaux, on continue à travailler l'objet, puis on le soumet à un traitement thermique, suffisant pour calciner le liant organique, puis vitrifier l'émail, cependant à température inférieure à la température de ramolissement du verre.

2. Procédé selon la revendication 1, caractérisé en ce que la proportion de liant dans le mélange est comprise entre 1/3 et 1/2.

3. Procédé selon la revendication 1 ou 2, caractérisé en ce que l'émail contient de 15 à 30 % de silice.

4. Procédé selon l'une des revendications 1, 2 ou 3, caractérisé en ce que le liant est composé essentiellement de un ou plusieurs monomères polymérisables par rayonnement UV, un ou plusieurs oligomères polymérisables par rayonnement UV, un photo initiateur.

5. Procédé selon la revendication 4, caractérisé en ce que l'oligomère est un polyester d'acide orthophtalique, d'acide maléique et de butanediol 1-4.

6. Procédé selon les revendications 4 ou 5, caractérisé en ce que le photo initiateur est un alkyl éther de benzoïne.

7. Procédé selon les revendications 1 à 6, caractérisé en ce que le traitement thermique de calcination du liant et de vitrification de l'émail est combiné avec un autre traitement de l'objet dans lequel les hautes températures nécessaires sont atteintes, notamment un traitement de bombage et de réchauffage en vue du bombage ou de la trempe.

8. Application du procédé selon l'une quelconque des revendications 1 à 7 à la fabrication de pare-brise munis de bandes d'émail, le mélange d'émail et de liant organique étant déposé sur le verre avant bombage et/ou trempe, le vitrage avec son dépôt étant acheminé sur des rouleaux, éventuellement dépôt orienté vers les rouleaux, puis en fin de fabrication le vitrage étant porté à des températures élevées, notamment en vue du bombage et/ou de la trempe, le liant organique étant alors détruit, puis l'émail vitrifié.

9. Dispositif pour la mise en œuvre du procédé selon l'une des revendications 1 à 7, caractérisé en ce qu'il comporte des émetteurs de lumière U.V. disposés en regard des deux faces du verre portant le dépôt.

**Claims**

1. A method of coating a glass object with enamel, characterized in that there is deposited on said object a mixture comprising enamel in suspension in an organic binder which polymerises under the effect of a radiation, notably ultra-violet radiation, the proportion of binder in the mixture being greater than 1/4, the object and at least the zone of deposition, on its two surfaces, is subjected to radiation to obtain a hard coating, notably capable of being subjected without deterioration to transporting of the object on transport rollers with a coated surface against the rollers, and work on the object is continued and it is then subjected to heat treatment sufficient to calcine the organic binder and vitrify the enamel, at a temperature less than the softening temperature of the glass.

2. A method according to claim 1, characterised in that the proportion of binder in the mixture is from 1/3 to 1/2.

3. A method according to claim 1 or 2, characterised in that the enamel contains from 15 to 30 % of silica.

4. A method according to one of claims 1, 2 and 3 characterised in that the binder is composed essentially of one or more monomers which are polymerisable by ultraviolet radiation, one or more oligomers polymerisable by ultra-violet radiation, and a photo initiator.

5. A method according to claim 4, characterised in that the oligomer is a polyester of orthophthalic acid, maleic acid and 1,4 butanediol.

6. A method according to claim 4 or 5, characterised in that the photo initiator is an alkyl ether of benzoin.

7. A method according to one of claims 1 to 6, characterised in that the heat treatment for calcining the binder and vitrification of the enamel is combined with another treatment of the object in which the high temperatures required are obtained, notably curving and heating for subsequent curving or tempering.

8. Application of a method according to any one of claims 1 to 7 to manufacture of a windscreen provided with strips of enamel, the mixture of enamel and organic binder being deposited on the glass before curving and/or tempering, the pane with its deposit being transported on rollers, optionally with the deposit oriented towards the rollers, and the pane being brought to elevated temperatures at the end of manufacture, notably for curving and/or tempering, the organic binder being destroyed and the enamel vitrified.

9. Apparatus for carrying out a method according to any one of claims 1 to 7, characterised in that it comprises emitters for ultra-violet light facing two surfaces of the glass supporting the deposit.

**Patentansprüche**

1. Verfahren zum Überziehen eines Gegenstandes aus Glas mit Email, dadurch gekennzeichnet, daß auf den Gegendstand eine Mischung aus Email in Suspension in einem organischen, durch Bestrahlung, insbesondere mit UV-Strahlen, polymerisierbaren Bindemittel aufgetragen wird, dessen Anteil in der Mischung mehr als 1/4 beträgt, daß der Gegenstand und mindestens die Auftragungszone auf beiden Seiten zur Bildung eines harten Überzugs bestrahlt wird, der insbesondere einem Rollen des Gegenstandes mit seiner beschichteten Seite auf Transportrollen ohne Beschädigung standhält, und daß die Behandung des Gegenstandes fortgesetzt wird mit einer Wärmebehandlung zum Austreiben des organischen Bindemittels und zum Aufschmelzen des Emails bei einer Temperatur unter der Glaserweichungstemperatur.

2. Verfahren nach Anspruch 1, dadurch gekennzeichnet, daß der Anteil des Bindemittels in der Mischung zwischen 1/3 und 1/2 beträgt.

3. Verfahren nach Anspruch 1 oder 2, dadurch gekennzeichnet, daß das Email 15 bis 30 % Siliziumdioxid enthält.

4. Verfahren nach einem der Ansprüche 1, 2 oder 3, dadurch gekennzeichnet, daß das Bindemittel im wesentlichen aus einem oder mehreren durch UV-Bestrahlung polymerisierbaren Monomeren, einem oder mehreren durch UV-Bestrahlung polymerisierbaren, einem oder mehreren durch UV-Bestrahlung polymerisierbaren Oligomeren und einem Fotoinitiator zusammengesetzt ist.

5. Verfahren nach Anspruch 4, dadurch gekennzeichnet, daß das Oligomer ein Polyester aus Orthophtalsäure, aus Maleinsäure und aus 1-4 Butandiol ist.

6. Verfahren nach Anspruch 4 oder 5, dadurch gekennzeichnet, daß der Fotoinitiator ein Alkyläther aus Benzoin ist.

7. Verfahren nach den Ansprüchen 1 bis 6, dadurch gekennzeichnet, daß die Wärmebehandlung zum Austreiben des Bindemittels und zum Aufschmelzen des Emails mit einer anderen Behandlung des Gegenstandes kombiniert wird, welche hohe Temperaturen erfordert, insbesondere einer Biegebehandlung und einer Erwärmung zum Biegen oder Vorspannen.

8. Anwendung des Verfahrens nach einem der Ansprüche 1 bis 7 zur Herstellung von Windschutzscheiben, die mit Emailstreifen versehen sind, wobei die Mischung aus Email und organischem Bindemittel auf das Glas vor dem Biegen und/oder Vorspannen aufgetragen wird, das Glas mit seiner

Beschichtung auf Rollen, eventuell mit zu den Rollen gerichteter Beschichtung, transportiert wird, und schließlich am Ende des Herstellungsprozesses das Glas im Hinblick auf den Biege- und/oder den Vorspannvorgang auf erhöhte Temperatur gebracht und das organische Bindemittel dabei zerstört und das Email eingebrannt wird.

9. Vorrichtung zur Durchführung des Verfahrens nach einem der Ansprüche 1 bis 7, dadurch gekennzeichnet, daß die Vorrichtung Strahler für UV-Licht aufweist, welche auf beiden Seiten des die Beschichtung tragenden Glases angeordnet sind.